# EUROPEAN PATENT APPLICATION

(11) **EP 4 040 351 A1**
(43) Date of publication of application: **10.08.2022**
(21) Application number: 21155082.7
(22) Date of filing: 03.02.2021
(51) Int. Cl.: G06Q 10/00, G06Q 10/08

(54) **COMPUTER-IMPLEMENTED METHOD AND SYSTEM FOR MEAL ORDER AND DELIVERY**

(71) Applicant: MAUL ehf., 108 Reykjavik (IS)
(72) Inventor: PALSSON, Egill, 105 Reykjavik (IS); PALSSON, Hrafnkell, San Diego, CA 92109 (US)
(74) Representative: Arnason Faktor

(57) **Abstract**

A computer-implemented method and system are provided that enable servicing multiple work sites (user sites) each with a number of users such that each user can choose for each day from a number of lunch options that can be suitably pre-selected based on her or his preferences and optimisation of the system. The options offered to an individual user can thus be from more than one vendor per day and/or from different vendors on different days, to increase variety.

## Description

### FIELD OF INVENTION

The present invention relates to a method, system and software for managing food orders from a plurality of vendors to a plurality of users, through a centralized system.

### TECHNICAL BACKGROUND

It is a challenge for small companies to offer lunch to employees on the premises, which however is desirable in order to improve employee satisfaction and to encourage employees not to leave the premises for lunch. Ordering lunch from outside vendors for the site can be arranged but typically this results in individual preferences rarely being fully met. Some existing technologies in the market exist where a third-party intermediate offers customers the chance to order food from different vendors, these include Peach Labs, Inc. (Seattle, WA, USA) and Grubhub (Chicago, IL, USA). US2016148287A1 to Peach Labs, Inc. discloses systems and methods which provide for a system of providing a group of customers with goods and services, where customers seeking the same good or service may be aggregated in order to reduce delivery costs. There exists in the market a demand for improved technologies and solutions to manage food orders and delivery from a plurality of vendors to a plurality of users, with easy-to-use platforms that offer flexible varied menus.

### SUMMARY

It is an object of the present invention to overcome or at least alleviate the shortcomings of the prior art. More particularly, it is an object of the present invention to provide a computer-implemented method and system for arranging and managing food orders and delivery from a plurality of vendors to users at a plurality of sites.

The method and system of the invention can be utilised such that at a given work site (user site) with a number of users, each user can for each day choose from a number of lunch options that can be suitably pre-selected based on her or his preferences and optimisation of the system. The options offered to an individual user can thus be from more than one vendor per day and/or from different vendors on different days, to increase variety.

For such a system to operate effectively, a plurality of vendors need to sign up and several users, the invention then optimises menu offers to users to effectively allocate resources, offering each user a varied menu to meet users' expectations, yet preferably a limited number of choices per day to make the selection easy. Most preferably, the method and system of the invention are configured as a subscription system, meaning that users (and/or user sites) sign up for subscription to the service.

In one aspect the present invention provides a system and method for managing food orders and delivery from a plurality of vendors to users at a plurality of sites. In a basic aspect the method of the invention comprises the steps of:
a) registering a plurality of designated food providers (F1, F2, ... Fn),
b) registering a plurality of user sites (S1, S2, ... Sn),
c) registering a plurality of users at each user at the respective user sites (U1, U2 ... Un),
d) registering a plurality of offered courses from said food providers (C1, C2 ... Cn),
e) preparing menus to each user, M1 ... Mn, wherein each menu lists at least one course for each day listed in the menu,
f) provide each user with an order form with his/her respective menu,
g) receive user orders,
h) forwarding user orders to food providers,
i) arranging pickup route and delivery route for at least one delivery provider,
j) deliver ordered courses to user sites.
using a computer system with installed software for at least step e), the system being configured to constrain available courses in menus prepared in step (e) by one or more constraints selected from
- courses offered by each food provider,
- known meal preferences of one or more user,
- desired diversity in menus for each user,
- desired variation in menus between days for each user and/or user site, and
- capacity of each food provider.

The designated food providers are food providers that are designated by the system operator, generally meaning they have an agreement with the operator to participate and to deliver meals to the system. The food providers are for clarity designated herein as F1, F2 ...Fn.

The operator registers user sites where the service is offered and that have signed up for the services (i.e. one or more users at the site have signed up, or the site - employer or other agent on behalf of a group of users - has signed up the site with a number of users). Accordingly, the user sites in the method as operated are those sites that the operator has added to the system. The users sites are referred to herein for clarity with designations S1, S2 ... Sn and the users designated as U1, U2 ... Un. Generally the sites to which the service are offered are selected based on the geographical location, such that they are within the distribution sphere or certain distribution zone of the operator, and where it has been established that there are users (or those in charge of offering food to users) who desire to use the service. Depending on payment model applied at each site between users at the site and their employer (i.e. whether lunch is paid for, subsidised or fully paid by the employee), the operator can have contracts with partners on behalf of the sites, such as the employers, this would be a useful model in cases where employers pay for the lunch, fully or partially. The operator can also have direct contracts with individual users. Importantly however, whether or not the operator has financial interactions with the user, the user himself is individually registered and interacts himself/herself with the system. Accordingly, in the method and system a plurality of users at each site are registered such that the system recognises and interacts with each user individually.

It follows from the description herein that the method and system is generally set up as a subscription service, meaning that a site (site administrator/site contact and a group of users at a site) sign up to subscribe for the service for some minimum period of time, such as at least one week or more preferably at least one month. The subscription model does not necessarily require that each user at a registered site must order every day, the system offers the advantage that a user can indicate when he places his order that he will stand by (not have meals) one or more days in the following order period, e.g. if he/she is taking one or more days off, and preferably the method also allows a user to cancel a placed order for one or more day if this is done with some minimum time in advance, such as for example at least before midnight the preceding day, or before 9 AM on the day being cancelled, or at least before a final order is transmitted to the respective food provider(s) involved for making the respective cancelled dish. This is useful when a user's schedule changes with short notice, he is sick, etc.

The registered food providers agree to offer at least one and typically a plurality of courses to the system, where courses offered by a particular food provider can be the same on all days or different courses on different days or a mix thereof. The different courses are referred to herein as C1, C2, ...Cn.

According to the method of the present invention, menus are prepared for the users, meaning that each user is presented with a menu from which he/she can select courses. Preferably and advantageously, the menu is provided in advance such as at least on the day before the course should be delivered but more preferably a menu is presented for a number of a days such as one week at a time and can then be provided to the user e.g. before the end of the preceding week.

It is a particular advantage of the method and system of the invention that menus can be automatically generated based on a number of input variables as exemplified herein. Thus, for example, the method may take into account variables such as but not limited to offered food provider courses, food provider scores, user order history, registered user preferences, user site constraints and preferences, user site scores, food provider profiles, user profiles and user site profiles, physical and geographical constraints, variety constraints, etc.

In one embodiment, one or more user sites are provided with a site basic menu, meaning that users at that site are presented with substantially the same or identical menu. The site menu can however in some embodiments be individually altered such that users that have registered preferences (such as but not limited to vegetarian or vegan-only) are presented only with courses that meet their preferences. In other embodiments, a basic menu is set up such that at least one and preferably at least two courses will fulfil criteria of any given user. Thus, for example, a basic site menu where one or more users are vegetarian can be arranged such that out of three or four courses that are offered on a particular day, at least one and preferably at least two of said courses are vegetarian courses. Such setup of course means that all users can freely choose those meals, not only users who have in advance indicated that they only wish to choose vegetarian courses.

A menu presented to a user thus lists at least one course for a day, but typically a number of courses, such as 2, 3 or 4 different courses for any particular day. It is however an advantage of the method and system, that the options for a particular day can be kept limited while still providing the users with a variety of different courses over a number of days such as for a whole week or more. Thus, as a non-limiting example, a user may receive a menu for the following week offering to choose from courses C1-C4 on Monday, courses C5-C8 on Tuesday, etc.

The method typically prompts users for their orders, the user is provided with an order form with his/her respective menu and given a certain deadline to submit, such as before end-of-day on a Friday, for submitting his order for the following week. Preferably, the system sends automatic reminders to users if their orders are not received at some certain time e.g. preceding the deadline for placing orders.

As understood from above, it is an advantage of the method that the flexibility and variety offered to users puts no demands on a manager/contact person on each site, i.e. there is no need for a contact person to remind users, collect orders or such. After the site has signed up and been registered in the system, any such interactions are arranged between the operator and users directly.

In some embodiments the method preferably provides for alterations, such that the user can cancel one or more orders, e.g. due to sickness or other unforeseen excuse, and in some embodiments he can alter his order by picking another course instead of one already selected, if this is done in advance of the order for that day being transmitted to the respective food providers.

The received orders are forwarded to the registered food providers, typically such that the system will register the user' orders and provide based thereon compiled orders for each respective provider, such that the provider gets a concise order listing the numbers ordered of each course that he offers for a particular day. Thus, as an example, food provider F1 may receive an order for a particular day, that he shall prepare and provide 55 dishes of course C11, 88 dishes of course C12 and 23 dishes of course C13. Preferably, however, a food provider receives the order such that it lists also the number of dishes of each course going to each site, in that way the food provider can arrange the dishes so that they can readily be distributed to the respective sites. For example, the food provider may receive information in his order that site S1 shall receive 10 dishes of course C11 and 8 dishes of course C12, etc.

In one embodiment the food provider labels the prepared dishes with labels showing to which user site the dish shall be delivered and in some embodiments the label shows also the name or other reference identifying a specific user.

A delivery provider or driver assigned to the system picks up the prepared orders from food providers. (As used herein, the term delivery provider may refer to a provider offering driver services, e.g. a particular party or company that may have more than one driver; a delivery provider may also refer to a single delivery driver, individual drivers may also be referred to simply as delivery drivers.) In one embodiment the delivery provider picks up orders at a number of providers. In such embodiments the method provides the courier with a pickup and delivery schedule, which in a most basic form lists the food providers that the delivery provider shall make a pickup at and lists the sites where he is to deliver. In an embodiment, he may then deliver the dishes directly to the user sites, such that each user site gets the number of dishes for each course, ordered by the users at that site for that day.

In preferred embodiments the method and system make use of more than one delivery provider (delivery driver) and multiple food providers. Advantageously, the method incorporates in some embodiments the use of a central depot for delivery providers to meet and exchange picked-up dishes for delivery. A first delivery provider can be assigned to pick up dishes at one food provider F1 or more than food provider, he brings all dishes from F1 to the depot where he leaves the dishes that are going to sites other than those sites that he is assigned to deliver to, and picks up dishes going to those same sites that other delivery providers brought to the depot. The use of a depot and a plurality of delivery providers thus greatly enhances flexibility of the system. It means that users at a given site can more readily be offered courses from different food providers on any given day, and this enhances the distribution capacity of the system and can enlarge the geographical zone of user sites that the system can reach. Thus, as an example, in a basic embodiment, each of a plurality of delivery providers picks up dishes at one or more food providers. It should be noted that in general, the geographical location of food providers is not as constrained as the location of user sites, meaning that for the system it is relatively easy to make use of e.g. one food provider that is located at some distance from the depot, that provider will simply have to prepare the dishes timely so that a designated delivery provider can pick them up soon enough to be able to reach the depot at the desired depot exchange time, so that the delivery providers can exchange dishes and load for delivery the dishes going to their designated users sites.

In some embodiments which are useful in large cities, the method and system can operate with more than one depot, in such an embodiment typically a number of delivery providers are assigned to one depot and they take care of delivery of dishes to user sites in a user zone around that depot. Another depot can then be located e.g. in another part of the same city or another city with another set of delivery providers assigned to deliver within the user zone of that depot. In this way, multiple depots and teams of delivery providers can operate but importantly these can readily be managed by use of the same central computer system and the same basic method and operator.

The method and system make use of a central computer system with installed software that enables the method to be carried out. The software firstly provides for the registration of food providers, courses, users, and users sites. Secondly, software prepares the menus that the users are provided with and the associated order forms and the software is configured to receive orders and arrange therefrom orders to the food providers. As described in more detail below, the software applied by the invention can be arranged in two main modules, an Order Management Module (OMM) and a Menu Optimisation Module (MOM), which can be run on the same or different computers. The OMM handles orders, meaning the interaction between users and the system relating to user orders on one hand, the interaction between delivery providers and the system and the interaction between food providers and the system on the other hand. Thus, the OMM typically handles the presentation of order input systems, prompting users for orders, receiving and processing their orders, and preparing orders to the food providers.

Advantageously, the software can be configured to constrain offered courses in the menus by one or more constraints as mentioned above.

Thus, as a non-limiting example, the software can be configured to offer a user a weekly menu that consists of three or four main choices for each day, with at least some choices being different on different days or all choices being different for different days, meaning that on Monday courses Cl-C3 are offered to choose from, on Tuesday courses C4-C6 are offered, etc. A user at another site could in one embodiment be offered different courses, e.g. on Monday he chooses from C1, C2, C4, on Tuesday he chooses from C3, C5, C7, etc. This provides the users with a great variety of food over the week, while not burdening an individual with a long list of offers for each day. Advantageously, menus for different weeks (or other cyclic periods) can as well be different, to further increase variety. Constraints or criteria for arranging menus can include for example criteria that dictate a user being offered certain types of meals on certain days and/or certain number of days per week , such as a certain category of meals on Fridays, another category on Mondays, a fish dish on a particular day, etc. Such categories can be arranged depending on the variety offered from the respective food providers, and could be e.g. grill type food, festive food, soups and lighter meals, vegetarian or vegan food, seasonal food, etc. In an embodiment constraints for courses offered in a menu are organised and arranged according to a menu frame, which comprises a framework for the respective criteria used in a particular system.

As mentioned above, in one embodiment, each site can be provided with a site basic menu. Thus, in some situations, all users at a site can be provided with the same menu. In such embodiments user preferences can be dealt with through the different daily offers, for example such that on each day at least one vegetarian and/or vegan meal is provided but preferably at least two such meals are offered per day. This however would result in those users that desire to order only such courses would have less variety of courses to choose from. Thus, it is an advantage of the invention that in certain embodiments different users at the same site can be provided with different menus, based on their different individual preferences.

Also, the method can account for different plans for different sites and or users, e.g. such that higher price premium plans offer more variety and/or different courses. Thus, in one embodiment, a user site can choose a basic plan where its users are offered a basic menu as described above, offering e.g. four different courses per day with at least one or two non-meat or vegetarian or vegan. The user site could also opt for a premium plan where menus offered to users have more variety between different users, depending on the preferences.

The method preferably takes into account the location of food providers and preferably also the location of user sites. Thus, the method may limit options from a provider in one end of town for a user site in another end of town such that that site is not offered courses from said provider or only on limited days, as compared to user sites closer to the provider. When a depot is used, as described above, all dishes would generally be delivered to the depot and thus all user sites can readily be offered courses from any food provider. If more than one depot is used, each depot will have its delivery zone within which its associated user sites are located, in these cases some food providers may be (but need not be) assigned to certain one or more depots but not others. The method may also need to take into account the number of users at each site and relate to capacity of the food providers, such that at a large site, with a high number of users, all users may not be offered a particular course, which the provider can only provide in limited numbers. Thus, that course may be taken off the menus for that site altogether, or offered to a subgroup of the users at that site.

In some embodiments the system allows for choosing extras or add-on items, such as but not limited to side dishes, deserts, salads, drinks, fruit, breads and rolls, cakes, candies, etc. In some embodiments some or all such offered add-on items are stored in a depot used in the system. Thus, the ordering management module provides users with the option of choosing available add-on items and prepares delivery lists of add-on items for the delivery providers and/or the food providers, as applicable.

It is an advantage of the invention that the menu creation in useful embodiments makes use of at least one optimisation algorithm or machine learning algorithm, for the optimisation of menus, and in some embodiments also pickup routes and/or delivery routes. Accordingly, the algorithm is provided with a set of constraints selected from the above mentioned, and data defining the user group (number of users, user sites, user preferences, etc.) and with the input data the system outputs menus to users. The at least one machine-learning algorithm used in the present invention can be selected from but is not limited to one or more of an artificial neural network, decision tree, support vector machine, regression analysis, and a Bayesian network model, preferably the machine-learning algorithm comprises an ensemble algorithm.

The invention provides in another aspect a computer system that comprises components and computing instructions to carry out the computer-implemented parts of the methods of the invention. Thus, the computer system of the present invention comprises one or more processors, a memory coupled to the one or more processors storing program instructions that when executed by the one or more processors cause the one or more processor to at least arrange a database for storing entries, enabling input of entries comprising
- a plurality of designated food providers F1, F2, ... Fn,
- a plurality of user sites S1, S2ᵢ, ... Sn,
- a plurality of users at each user site U1 ... Un,
- a plurality of offered courses from said food providers C1... Cn,
preparing menus to each user, M1 ... Mn, wherein each menu lists at least one course, wherein courses offered on a menu are constrained by one or more constraints as described above;
providing each user with an order form with his/her respective menu, enabling receiving input from users comprising user orders, and forwarding orders to food providers.

To accommodate for the embodiments using a plurality of delivery providers, the program instructions preferably also cause the one or more processors to output delivery orders for a plurality of couriers that pickup orders from food providers and meet in a depot to exchange courses for delivery to users according to the delivery orders. In some embodiment the program instructions of the system comprise at least one optimisation algorithm or machine learning algorithm for optimisation of at least menus . Said optimization algorithm or machine-learning algorithm can advantageously comprise one or more algorithms selected from an artificial neural network, decision tree, support vector machine, regression analysis, and a Bayesian network model, preferably the machine-learning algorithm comprises an ensemble algorithm.

Yet a further aspect of the present invention sets forth a computer-readable storage medium storing instructions for enabling the preparation of menus for a plurality of users at a plurality of sites, for a system and method as described herein for the management and delivery of food orders from a plurality of food providers to a plurality of users at a plurality of user sites. Accordingly, the computer-readable storage medium stores instructions for enabling the preparation of menus for a plurality of users at a plurality of sites for the users to order food from a plurality of food providers, the instructions when executed by a processor causing the processor to at least allowing and enabling
a) registering in a database a plurality of designated food providers,
b) registering in said database a plurality of user sites,
c) registering in said database a plurality of users at each user site,
d) registering in said database a plurality of offered courses from said food providers,
e) preparing menus for each user, wherein each menu lists at least one course for each day listed in the menu,
f) preparing an order input form for each user with his/her respective menu and transmitting to said user,
g) receiving user orders, and
h) forwarding compiled user orders to food providers,
wherein courses offered on a menu are constrained by one or more constraints selected from
- diversity and number of courses offered by each food provider,
- known meal preferences of one or more user,
- desired diversity in menus for each user,
- desired variation in menus between days for each user and/or user site, and
- capacity of each food provider.

### EXAMPLES OF EMBODIMENTS

1. A computer-implemented method for managing food orders and delivery from a plurality of food providers to users at a plurality of sites comprising,
   a) registering a plurality of designated food providers,
   b) registering a plurality of user sites,
   c) registering a plurality of users at each user site,
   d) registering a plurality of offered courses from said food providers,
   e) preparing menus to each user, wherein each menu lists at least one course,
   f) provide each user with an order form with his/her respective menu,
   g) receive user orders,
   h) forwarding user orders to food providers,
   i) arranging pickup and delivery schedule for at least one delivery provider,
   j) deliver ordered courses to user sites,
   using a computer system with installed software for at least step (e), the system being configured to constrain available courses in menus prepared in step (e) by one or more constraints selected from
   - courses offered by each food provider,
   - known meal preferences of one or more user, user group or user site,
   - desired diversity in menus for each user and/or user site,
   - desired variation in menus between days for each user and/or user site, and
   - capacity of each food provider.
2. The method according to embodiment 1, wherein said courses to users are constrained by all listed constraints in claim 1.
3. The method according to embodiment 1 or 2, wherein the system is further configured to constrain by one or more constraints selected from
   - number of users at each user site,
   - location of user sites,
   - optimisation of pickup route, and
   - optimisation of delivery route.
4. The method according to embodiment 1, wherein more than one delivery provider is used in steps i) and j).
5. The method according to embodiment 1, wherein the method makes use of at least one depot for delivery providers to meet and exchange picked-up courses for delivery.
6. The method according to any of the preceding embodiments, wherein each user at initial registration is prompted to input user preferences and qualifiers.
7. The method according to any of the preceding embodiment, wherein the system registers user preferences based on their order history.
8. The method according to any of the preceding embodiment, wherein each user site is provided with a site basic menu.
9. The method according to any of the preceding embodiments, wherein each user is offered different courses on different days in a cyclic period.
10. The method according to any of the preceding embodiments, wherein said order form is provided for a plurality of days such as on a weekly basis.
11. The method according to any of the preceding embodiments, wherein said order form lists add-on items selected from drinks, deserts, candies, breads, salads, fruits and cakes.
12. The method according to embodiments 11 and 5, wherein at least some of said add-on items are stored in said depot.
13. The method according to any of the preceding embodiments, wherein said software includes at least one optimisation algorithm or machine learning algorithm, for optimisation of at least menus and preferably also pickup routes and delivery routes.
14. The method according to embodiment 13, wherein said machine-learning algorithm comprises one or more algorithm selected from an artificial neural network, decision tree, support vector machine, regression analysis, and a Bayesian network model, preferably the machine-learning algorithm comprises an ensemble algorithm.
15. A computing system, comprising:
   one or more processors,
   a memory coupled to the one or more processors and storing program instructions that when executed by the one or more processors cause the one or more processor to at least
      - arranging a database for storing entries
      - enabling input of entries comprising
         - a plurality of designated food providers,
         - a plurality of user sites,
         - a plurality of users at each user site,
         - a plurality of offered courses from said food providers,
      - preparing menus to each user, Mᵢ ... Mₙ, wherein each menu lists at least one course,
   wherein courses offered on a menu are constrained by one or more constraints selected from
      - diversity and number of courses offered by each food provider,
      - known meal preferences of one or more user,
      - desired diversity in menus for each user,
      - desired variation in menus between days for each user and/or user site, and
      - capacity of each food provider,

      - providing each user with an order form with his/her respective menu,
      - further enabling receiving input from users comprising user orders, and
      - forwarding orders to food providers.
16. The computing system according to embodiment 15, the program instructions when executed by the one or more processors further cause the one or more processor to output delivery orders for a plurality of couriers that pickup orders from food providers and meet in a depot to exchange courses for delivery to users according to the delivery orders.
17. The computing system according to embodiment 15, wherein said program instructions comprise at least one optimisation algorithm or machine learning algorithm, for optimisation of at least menus offers.
18. The computing system according to embodiment 15, wherein said optimisation algorithm or machine-learning algorithm comprises one or more algorithm selected from an artificial neural network, decision tree, support vector machine, regression analysis, and a Bayesian network model, preferably the machine-learning algorithm comprises an ensemble algorithm.
19. A computer-readable storage medium storing instructions for enabling the preparation of menus for a plurality of users at a plurality sites, the instructions when executed by a processor causing the processor to at least allowing and enabling
   a. registering in a database a plurality of designated food providers,
   b. registering in said database a plurality of user sites,
   c. registering in said database a plurality of users at each user site,
   d. registering in said database a plurality of offered courses from said food providers,
   e. preparing menus to each user, wherein each menu lists at least one course for each day listed in the menu,
   f. preparing an order for each user with his/her respective menu and transmitting to said user,
   g. receiving user orders, and
   h. forwarding compiled user orders to food providers,
   wherein courses offered on a menu are constrained by one or more constraints selected from
   - diversity and number of courses offered by each food provider,
   - known meal preferences of one or more user,
   - desired diversity in menus for each user,
   - desired variation in menus between days for each user and/or user site, and
   - capacity of each food provider.

### Brief description of the drawings

The skilled person will understand that the drawings, described below, are for illustration purposes only. The drawings are not intended to limit the scope of the present teachings in any way.
FIG. 1 shows a diagram illustrating an overview of the main components and participants in the system of the invention.
FIG. 2 shows a schematic overview of the physical architecture of the system of the invention.
FIG. 3 shows a flowchart depicting steps as performed by a user in the method and system, for placing an order.
FIG. 4 is a flowchart depicting the main steps of the menu optimisation process, performed by the menu optimisation module when creating menus for a specific period in time.
FIG. 5 shows a flowchart describing the steps a food provider follows and performs when preparing food for the stated mealtime.
FIG. 6 shows a chart outlining steps a food provider may perform when confirming orders for the stated period.
FIG. 7 shows a flowchart outlining steps a delivery provider follows in an embodiment of the process.

### DETAILED DESCRIPTION

In the following, exemplary embodiments of the invention will be described, referring to the figures. These examples are provided to enable further understanding of the invention, without limiting its scope. In the following description, a series of steps are described. The skilled person will appreciate that unless required by the context, the order of steps is not critical for the resulting configuration and its effect. Further, it will be apparent to the skilled person that irrespective of the order of steps, the presence or absence of time delay between steps, can be present between some or all of the described steps.

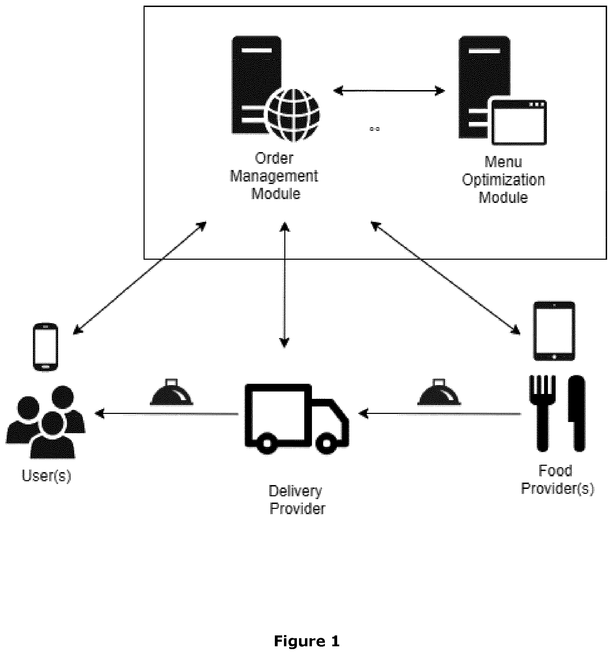

Referring to FIG. 1, the figure illustrates a basic overview of the main features of the invention: main participants, components and their respective interactions. The back-end system of the invention (100) can be modularized into two main modules involving three main participants.

The first module, the Order Management Module (101) - OMM (e.g. one or more servers or computers configured to implement the order management features described here) has the primary function to present menu offers (111) to users (103) at user sites (106), to prompt and allow users to place orders, to collect the placed orders and forward and present them to food providers (105).

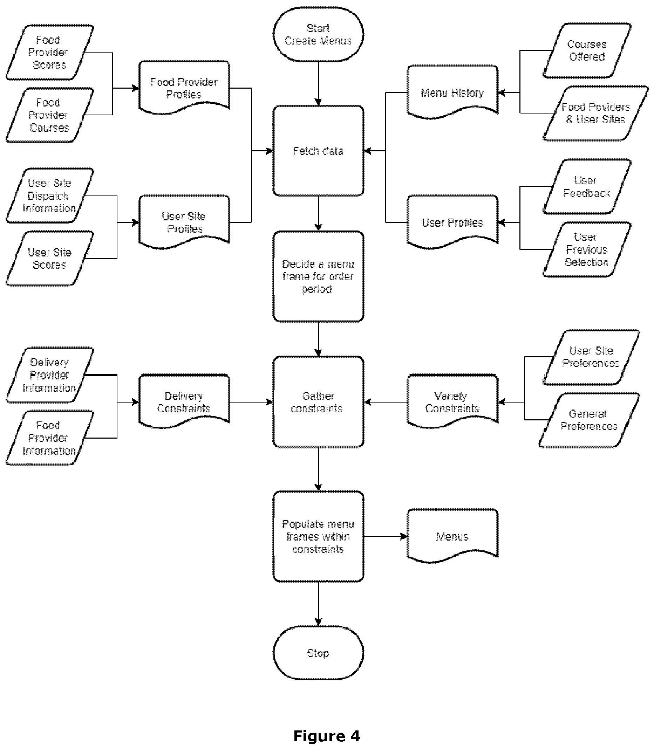

Secondly the Menu Optimization Module (102) - MOM (e.g. one or more servers or computers configured to implement the menu optimization features described here) has as primary function to generate menus (110) for the Order Management Module to present (111). The MOM collects all necessary information in the form of profiles for participants involved, such as food providers (411), user sites (412) and user profiles (414). It also collects the history of menus generated (413). This is better described in the menu optimization flowchart figure (FIG. 4).

Participants shown in FIG. 1 are users (103) at user sites (106), delivery providers (104) and food providers (105). The order management module (101) presents users with a menu comprising of courses (111) from food providers. Users select from the menu and both delivery and food providers are notified of orders. These can be collected into suitably presented order forms that compile together the individual user orders to the food providers and delivery providers. When the order ships one or more delivery providers carry out the delivery of food from the food provider to users at user sites (120 & 121).

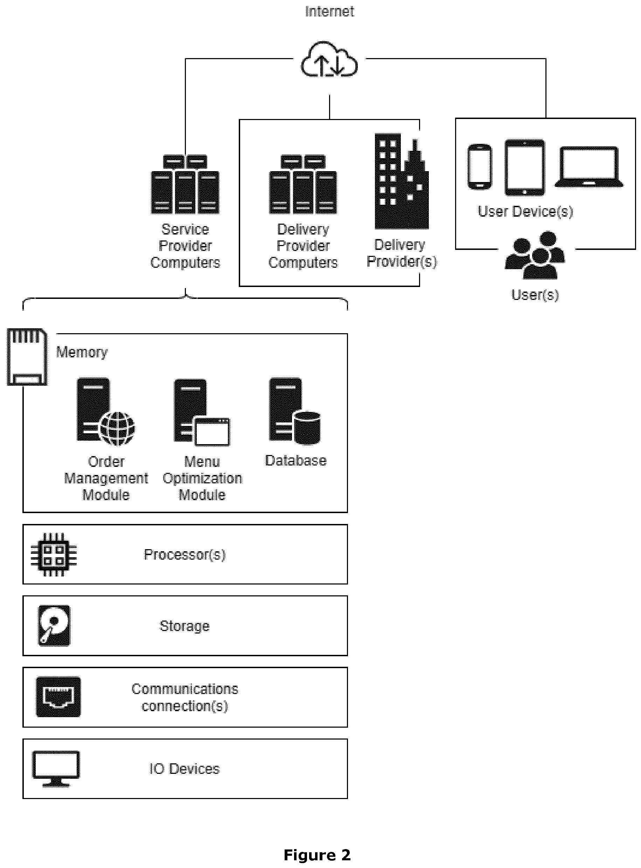

FIG. 2 illustrates the physical architecture of an embodiment of the computer-implemented method and system of the invention for arranging and managing food orders and delivery from a plurality of food providers (201) to users at a plurality of sites (235). A "service provider" (also referred to as operator) is here depicted operating and overseeing the system of the invention (200). Thus, the service provider, as used herein, can be a particular entity that manages the computer system of the invention (205) and operates the methods herein described and management of the overall service system, a service provider can in some embodiments be delivery provider who has, e.g. through a license, been provided with a system of the invention as described herein.

The service provider has installed the computer system of the invention on his server infrastructure, the 'Service Provider Computers' (205) which can advantageously be as described above, (can also be cloud-based or otherwise arranged through the services of an external computer service provider). Both the Order Management Module (OMM) and the Menu Optimization Module (MOM) are run in memory (210) by one or more computer processor (as describe generally above) (214) relying on data from the Database (213) that reads and writes data from computer storage (215). The system is made accessible using communication connections internally between servers (216) and by connecting with the internet. Typically, service operator personnel manages and configures the computer system using input and output devices (217).

The individual hardware components are as such known to the skilled person. Accordingly, the one or more processors mentioned above (214) can comprise in either or both modules a uniprocessor system including one processor, or a multiprocessor system including several processors (e.g., two, four, eight, or another suitable number). The processors may be any suitable processor capable of executing instructions. For example, in various embodiments the processors may be general-purpose or embedded processors implementing any of a variety of instruction set architectures (ISAs), such as the x86, PowerPC, SPARC, or MIPS ISAs, or any other suitable ISA. In multiprocessor systems, each of the processors may commonly, but not necessarily, implement the same ISA. In some embodiments the operative modules (OMM, MOM) mentioned above operate on the same main computer but can also operate on separate computers or processors.

The memory (210) coupled to the one or more processors of the system of the invention storing program instructions and data in the mentioned database (213) may be implemented using any suitable memory technology, such as static random access memory (SRAM), synchronous dynamic RAM (SDRAM), nonvolatile/Flash-type memory, or any other type of memory known in the art. The memory can also comprise at least in part computer-accessible media, such as non-transitory media, or on similar media separate from the processor or main memory of a computer being used, such storage media or memory media such as magnetic or optical media (215), e.g., disk or CD/DVD-ROM coupled to a computer system via I/O interface. Program instructions and data stored via a non-transitory computer-readable medium may be transmitted by transmission media or signals such as electrical, electromagnetic, or digital signals, which may be conveyed via a communication medium such as a network and/or a wireless link (216).

A network interface may be configured to allow data to be exchanged between the computer system and other devices attached to a network (216), such as other computer systems, or between nodes of the computer system. In various embodiments, the network interface may support communication via wired or wireless general data networks, such as any suitable type of Ethernet network. For example, the network interface may support communication via telecommunications networks such as analog voice networks, digital fiber communications networks, or the like.

Applicable input/output devices are used and may form part of the system and may include one or more display terminals, keyboards, keypads, touchpads, scanning devices, voice or optical recognition devices, or any other devices suitable for entering or retrieving data by one or more computer systems (217). Multiple input/output devices may be present in the system of the invention or may be distributed on various nodes of the computer system or connected thereto. In some embodiments, similar input/output devices may be separate from the computer system and may interact with one or more nodes of the computer system through a wired or wireless connection, such as over the network interface (216).

Accordingly, the users interact with the system typically via user interface applications on their respective terminal devices such as PC computers, smart phones or other smart devices, and this is in preferred embodiments via web based user interface applications or apps or customized apps that are downloaded and installed on the user devices. As shown herein the food providers will typically also have at their end an interface device for necessary communication with the system (202), including receiving and confirming orders, as further described below.

The service provider (operator) (200), one or more delivery providers (220) and users (230) at user sites (235) typically connect over the internet using computers or other computing devices as mentioned above. User devices (231) may include any suitable mobile phone, mobile computing device, tablet computing device, desktop computer device, smart watch or any other internet browser enabled device. Users (230) interact with the service providers' computer system (205) over the internet using their respective devices (231). In the depicted embodiment delivery providers access ordering and scheduling information and interact with the service provider computer system over the internet using a computer or computing device (221). Delivery providers may interact with the service provider's computers using an Application Programming Interface (API) and thus integrating events and data with their own fleet management system.

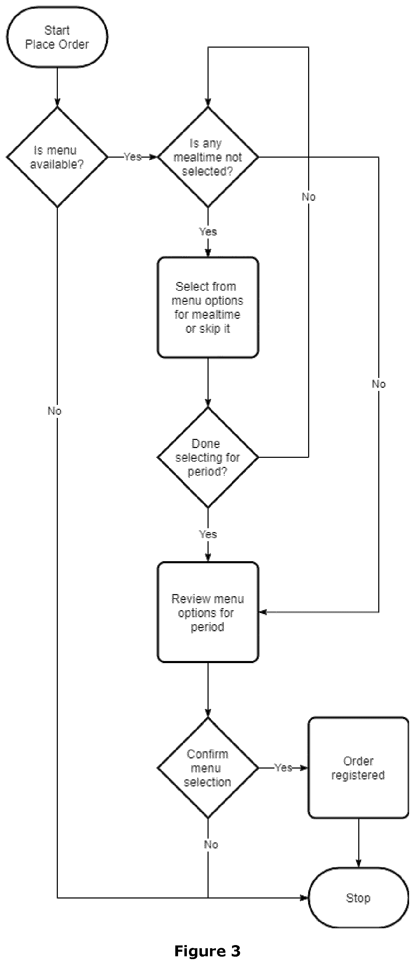

FIG. 3 describes in a flowchart for one embodiment the steps a user performs when ordering food for the stated period. Menus may not be available when the user first attempts to place an order. In that case he will have to wait and try again later (300). Reminder messages may be sent to users when menus become available.

Users can select a meal (specific course) for each mealtime during the period that the order refers to (such as a coming week), but are not required to select for all mealtimes. The user checks if any mealtime is left unselected (310) and selects something for that specific mealtime if he so wishes (320). This process is repeated (331) until the user is done selecting (330). To complete, the user reviews the selection (340) and submits the order (350). As a result the order will be placed and registered (360) in the Order Management Module (101 & 211). Thus, the user can order e.g. for one week at a time, but the system can as well accommodate other alternatives.

FIG. 4 illustrates main steps the Menu Optimization Module (102 & 212) performs when creating menus for a specific period.

The module collects data (410) about the main entities such as food providers (411), users (414) and user sites (412) as well as historic data (413). It may construct data profiles for the entities.

Food Provider Scores (4111) may refer to data reflecting user feedback scores, categories offered, price considerations, quality scores, etc. for a specific food provider. Food provider scores, together with the listed courses (4112) from each respective food provider make up food provider profiles that the system uses as input.

A User Site Profile (412) may be calculated and maintained by the system. It is comprised of the site's collective user score and historical dispatch information. User Site Scores (4122) may refer to data reflecting user feedback, categories offered, price, quality scores etc. collectively from all users at a specific user site. User Site Dispatch Information (4121) may refer to historical and projected data about delivery logistics and any specific dispatch requirements for a user site.

User Profiles (414) may be calculated and maintained by the system. They may comprise each user's feedback and previous selection. User Feedback (4143) may refer to data reflecting the user's reactions to the quality of the food offered, the quality of the delivery service or the quality of the service in general. User Previous Selection (4144) is historical data about each specific user's previous selections, including all options on each menu offered.

Menu History (413) may contain partial or complete history of each menu offered to any user and/or user site from any food provider. This may include data found also in entity profiles. It may comprise courses offered (4131) and complete historical data on food providers and user sites (4132). This may include geographical locations, market information, dates and timing, result of delivery, delivery provider information, price, courses, user feedback etc.

Using the data collected the module gathers constraints in the form of rules to be upheld in the process of generating menus for the period (420). This step may require more data to be collected. Constraints can be grouped into two major categories, firstly those regarding delivery and logistics and secondly those regarding variety preferences.

Delivery constraints (421) may be those caused by physical delivery to take place within the set time-frame, such as distances between food providers, base-location (depot) and user sites and the estimated transport time. Also the delivery providers' resources, such as the number of vehicles and their carrying capacity (4211). They may include an estimation or given limits of the food provider capacity to produce food of proper quality standards (4212).

Variety constraints (422) can be built upon quality standards such as not repeating the same or similar food on the menu too frequently, as well as health recommendations. The menu must be sufficiently varied for people not growing tired of the options presented and to offer regularly novelty to the users. Some variety preferences are specific to user sites (4221) and others are specific to a market or geographical location while some are generic to all (4222).

Based on the collected data the module may construct a menu frame (430) for each user site and/or user. Menu frames can be thought of as a collection of constraints or rules the algorithm can choose to apply in a certain period or location (market). Accordingly, a menu frame can for example dictate that a certain user or user site is offered a fish or seafood meal on at least one or two weekdays, certain style meals on Fridays, vegan or vegetarian meals on a particular weekday, etc. It is also possible to take into account religious and cultural preferences, e.g. festive meals during a holiday season but not in the weeks following the holidays. In other words, menu frames comprise a set of preferences and conditions that ensure an overall variety of courses between days, weeks, months, according to preferences of users or user groups. A menu frame may in some embodiments be constructed on the basis of health recommendations for people performing a specific type of work. Health recommendations are here considered a part of general preferences within variety constraints. For example, outdoor labour workers typically need higher energy meals than office workers, and so forth.

With input as has been described above, the algorithm will start the process of generating menus for selected periods populating the menu frames according to provided constraints (440). A menu might be offered to a subset of user sites, a single user site or to a subset of individual users regardless to what site they belong to

It follows that the process as outlined in FIG. 4 is typically an ongoing process, adding new and updated data as the system continues to operate.

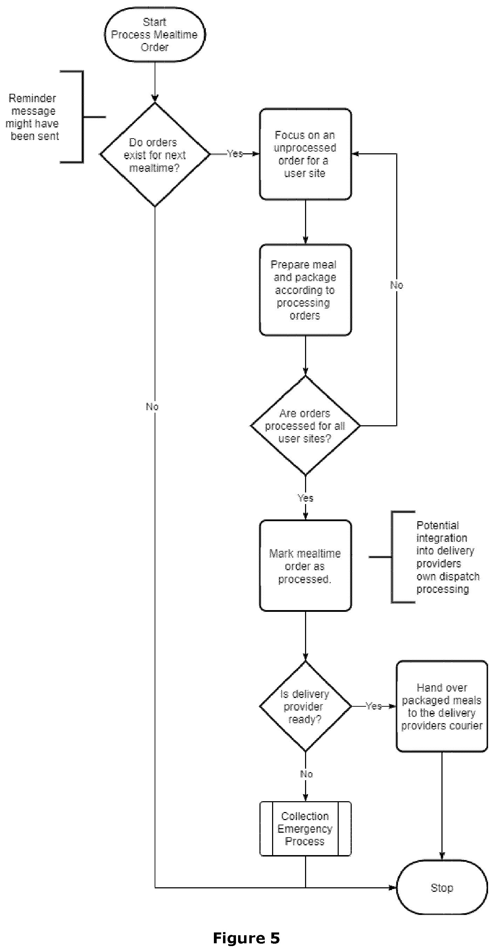

FIG. 5 describes the steps a food provider performs when preparing food for the stated mealtime. If no orders have been placed for the mealtime nothing has to be prepared and the process ends (500-No). If there are orders (500-Yes) these are prepared for each user site and packaged according to processing orders (520). Every user site should be processed as stated (530). Processing orders might consist of course type and count, timing and packaging instructions. Packaging instructions are the product of user orders, the setup of the menus offered and how users have placed their orders. It may state how the food should be packed, arranged and labelled for the collection.

When orders for all user sites have been prepared and packaged the mealtime orders are marked as processed (540). This may trigger a message to be sent to the delivery provider notifying the order is ready for collection. Also the delivery providers' own dispatch information might be updated when this happens.

The delivery provider collects the order from the food provider and transports it to the delivery base location (depot) for delivery route arrangement (560). If the delivery provider is unable to collect an emergency process should be initiated (570). This process may differ from place to place, certain markets may have access to resources others have not and the emergency process should reflect that.

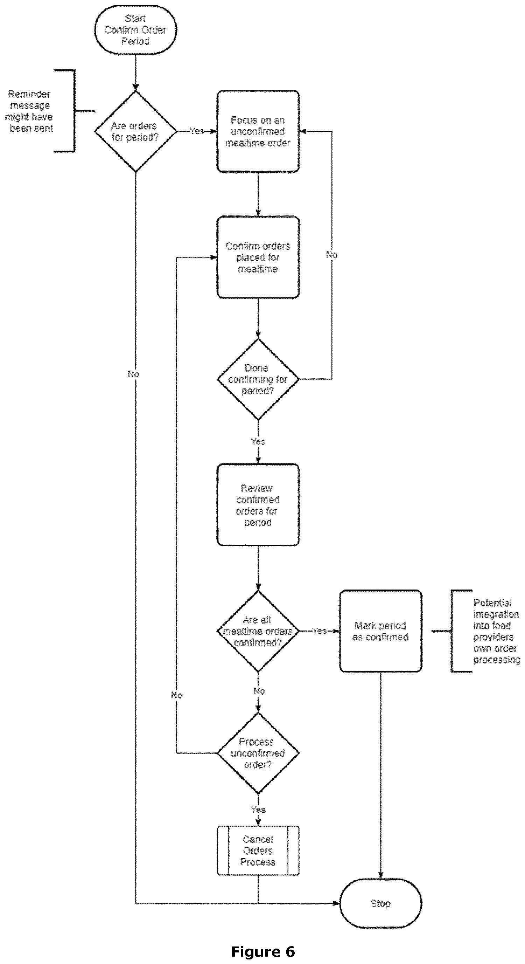

FIG. 6 describes the steps a food provider performs when confirming orders for the stated period. This process differs from when food providers prepare the food and happens earlier, normally the week before. The objective is to communicate the order details in a timely fashion and to acknowledge the order has been received.

If no orders have been placed for the period nothing has to be confirmed and the process ends (600-No). If there are orders (600-Yes) the food provider selects to confirm the order for each mealtime (620). If there is something erroneous or the food provider is unable to process the order or anything else that hinders the advancement of the order, the food provider selects not to confirm and the order is cancelled.

When orders for all mealtimes have been confirmed the whole period is reviewed (640). If all mealtime orders have been confirmed (650-Yes) the period is marked as confirmed (660).

If not all mealtime orders for the period have been confirmed (670-Yes), a cancellation process is executed where each mealtime order is cancelled or the food provider is replaced (680). The cancellation process may be specific to a food provider.

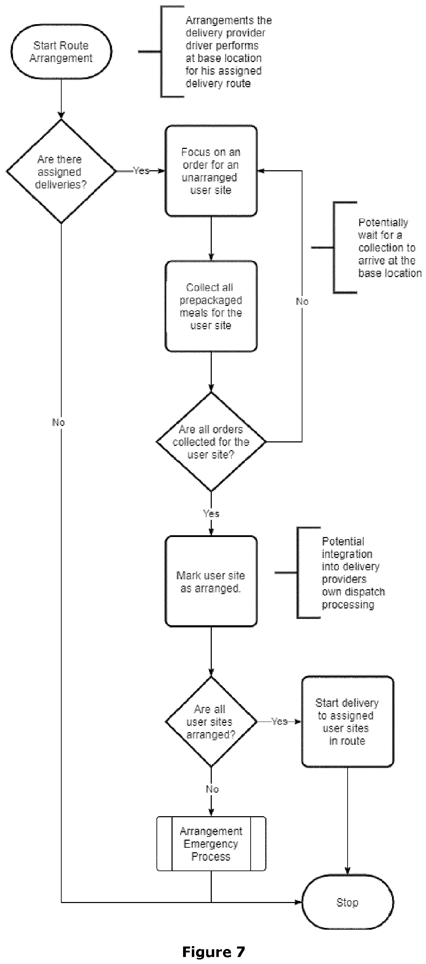

FIG. 7 describes the steps a delivery driver (delivery provider) performs to prepare the delivery route. This is performed at the base location where delivery drivers meet and arrange their routes. Each driver may have been assigned one or more user sites where the site has meals packaged from a couple of different food providers (700-Yes).

Each driver may have collected (been provided with) an order from a food provider before entering the base location (depot), and arrives with a number of packages. Other drivers can then access the packages for their own route (720). Potentially some drivers may have had to wait for their packages while others have collected everything.

Detailed information is available for the driver that has the responsibility of collecting the correct packages and verifying that every package is accounted for (710).

When every package for a user site has been collected (730-Yes) and the user site order is ready for delivery the driver marks the site as arranged (740). If all of the drivers' assigned user sites (750-yes) are arranged the delivery can proceed (760).

If any packages are missing or anything hindering the driver arranging all user sites an emergency process might be activated. It may differ in each marketplace and geographical location (770).

## Claims

1. A computer-implemented method for managing food orders and delivery from a plurality of food providers to users at a plurality of sites comprising,
a) registering a plurality of designated food providers,
b) registering a plurality of user sites,
c) registering a plurality of users at each user site,
d) registering a plurality of offered courses from said food providers,
e) preparing menus to each user, wherein each menu lists at least one course,
f) provide each user with an order form with his/her respective menu,
g) receive user orders,
h) forwarding user orders to food providers,
i) arranging pickup and delivery schedule for at least one delivery provider,
j) deliver ordered courses to user sites,
using a computer system with installed software for at least step (e), the system being configured to constrain available courses in menus prepared in step (e) by one or more constraints selected from
• courses offered by each food provider,
• known meal preferences of one or more user, user group or user site,
• desired diversity in menus for each user and/or user site,
• desired variation in menus between days for each user and/or user site, and
• capacity of each food provider.

2. The method according to claim 1, wherein the system is further configured to constrain by one or more constraints selected from
• number of users at each user site,
• location of user sites,
• optimisation of pickup route, and
• optimisation of delivery route.

3. The method according to claim 1, wherein more than one delivery provider is used in steps i) and j) and wherein the method makes use of at least one depot for delivery providers to meet and exchange picked-up courses for delivery.

4. The method according to any of the preceding claims, wherein each user at initial registration is prompted to input user preferences and qualifiers.

5. The method according to any of the preceding claims, wherein the system registers user preferences based on their order history.

6. The method according to any of the preceding claims, wherein said order form is provided for a plurality of days such as on a weekly basis.

7. The method according to any of the preceding claims, wherein said order form lists add-on items selected from drinks, deserts, candies, breads, salads, fruits and cakes.

8. The method according to any of the preceding claims, wherein said software includes at least one optimisation algorithm or machine learning algorithm, for optimisation of at least menus and preferably also pickup routes and delivery routes.

9. The method according to claim 8, wherein said machine-learning algorithm comprises one or more algorithm selected from an artificial neural network, decision tree, support vector machine, regression analysis, and a Bayesian network model, preferably the machine-learning algorithm comprises an ensemble algorithm.

10. A computing system, comprising:
one or more processors,
a memory coupled to the one or more processors and storing program instructions that when executed by the one or more processors cause the one or more processor to at least
- arranging a database for storing entries
- enabling input of entries comprising
- a plurality of designated food providers,
- a plurality of user sites,
- a plurality of users at each user site,
- a plurality of offered courses from said food providers,
- preparing menus to each user, Mᵢ ... Mₙ, wherein each menu lists at least one course,
wherein courses offered on a menu are constrained by one or more constraints selected from
- diversity and number of courses offered by each food provider,
- known meal preferences of one or more user,
- desired diversity in menus for each user,
- desired variation in menus between days for each user and/or user site, and
- capacity of each food provider,
- providing each user with an order form with his/her respective menu,
- further enabling receiving input from users comprising user orders, and
- forwarding orders to food providers.

11. The computing system according to claim 10, the program instructions when executed by the one or more processors further cause the one or more processor to output delivery orders for a plurality of couriers that pickup orders from food providers and meet in a depot to exchange courses for delivery to users according to the delivery orders.

12. The computing system according to claim 10, wherein said program instructions comprise at least one optimisation algorithm or machine learning algorithm, for optimisation of at least menus offers.

13. The computing system according to claim 10, wherein said optimisation algorithm or machine-learning algorithm comprises one or more algorithm selected from an artificial neural network, decision tree, support vector machine, regression analysis, and a Bayesian network model, preferably the machine-learning algorithm comprises an ensemble algorithm.

14. A computer-readable storage medium storing instructions for enabling the preparation of menus for a plurality of users at a plurality sites, the instructions when executed by a processor causing the processor to at least allowing and enabling
a. registering in a database a plurality of designated food providers,
b. registering in said database a plurality of user sites,
c. registering in said database a plurality of users at each user site,
d. registering in said database a plurality of offered courses from said food providers,
e. preparing menus to each user, wherein each menu lists at least one course for each day listed in the menu,
f. preparing an order for each user with his/her respective menu and transmitting to said user,
g. receiving user orders,
h. forwarding compiled user orders to food providers,
wherein courses offered on a menu are constrained by one or more constraints selected from
- diversity and number of courses offered by each food provider,
- known meal preferences of one or more user,
- desired diversity in menus for each user,
- desired variation in menus between days for each user and/or user site, and
- capacity of each food provider.
